# FASCICULE DE BREVET EUROPEEN

(11) **EP 0 274 289 B1**
(45) Date de publication et mention de la délivrance du brevet: **10.03.1993**
(21) Numéro de dépôt: 87402625.5
(22) Date de dépôt: 20.11.1987
(51) Int. Cl.: G02F 1/015, G02F 1/17, H01L 29/14

(54) **Modulateur optique à superréseau**
Optischer Übergitter-Modulator
Superlattice optical modulator

(30) Priorité: 27.11.1986 FR 8616576
(43) Date de publication de la demande: 13.07.1988
(73) Titulaire: CENTRE NATIONAL DE LA RECHERCHE SCIENTIFIQUE (CNRS), 75700 Paris (FR)
(72) Inventeur: Voisin, Paul, F-75005 Paris (FR)
(74) Mandataire: Plaçais, Jean-Yves

(56) Documents cités:
- EP-A- 0 143 000
- EP-A- 0 201 686
- WO-A-85/05134
- OPTICAL ENGINEERING, vol. 24, no. 4, juillet/août 1985, pages 556-564, Society of Photo-Optical Instrumentation Engineers, Bellingham, Washington, US; D.S. CHEMLA et al.: "Nonlinear optical properties of GaAs/GaAlAs multiple quantum well material: phenomena and applications"
- OPTICAL ENGINEERING, vol. 25, no. 2, février 1986, pages 211-218, Society of Photo-Optical Instrumentation Engineers, Bellingham, Washington, US; G.H. DÖHLER: "Light generation, modulation, and amplification by n-i-p-i doping superlattices"

## Description

L'invention concerne les superréseaux semi-conducteurs, et vient en proposer une application comme modulateurs électro-optiques.

On sait qu'un superréseau est une structure semi-conductrice dans laquelle apparaissent, le long d'un de ses axes (l'axe de croissance), des variations périodiques de la limite inférieure de la bande de conduction, et de la limite supérieure de la bande de valence.

En pratique, un superréseau est défini par l'empilement périodique, sur un substrat, de deux couches de deux composés différents, ou bien dopés différemment.

Il en résulte l'apparition de puits de potentiel, tant dans la bande de conduction (en "creux", pour les électrons) que dans la bande de valence (en "bosses" pour les trous).

Un superréseau est donc un matériau pratiquement isotrope, en tant que monocristal, dans les deux dimensions de chacune de ses couches. Il est fortement anisotrope dans la troisième dimension, parallèle à l'axe de croissance.

A cet égard, plusieurs situations peuvent être distinguées, selon les caractéristiques du superréseau, épaisseur et composition des couches, essentiellement, lesquelles déterminent si la fonction d'onde pour les électrons (ou les trous) confère à ceux-ci une probabilité significative d'atteindre par effet tunnel un puits quantique (de potentiel) adjacent :
- si cette possibilité est quasi-nulle, on est en présence d'une succession de puits quantiques découplés; la qualification de superréseau est d'ailleurs discutable pour une telle structure;
- si la probabilité de passage par effet tunnel est significative, on est en présence d'un vrai superréseau;
- si la probabilité de passage est très élevée, la structure tend à posséder, selon son axe de croissance, le même comportement que dans les deux directions perpendiculaires et la qualification de superréseau est à nouveau discutable pour une telle structure.

Il existe actuellement une intense activité de recherche sur les modulateurs électro-optiques, comme composants pour les télécommunications par fibres optiques.

Or, la plupart des résultats publiés récemment (voir l'article de DAB Miller, J.S. Weiner, D.S Chemla, " Electric field dependance of Linear Optical Properties in quantum well structures : Wave guide electro absorption and sum rules". IEEE Journal of quantum Electronics QE22, September 1986 page 1816 ; D.A.B. Miller, "Novel optical modulators and bistable devices using the self-electro-optic effect in semiconductor quantum wells",SURFACE SCIENCE 174, 221, 1386) exploitent l'effet Stark quadratique présenté par la transition fondamentale d'un exciton (paire électron-trou) dans un puits quantique de GaAs - AlₓGaₗₓAs.

Il en est de même dans le composant électro-optique semiconducteur décrit dans la Demande de brevet européen N^{o} 0 143 000.

Schématiquement, l'effet est le suivant : lorsqu'un champ électrique est appliqué perpendiculairement au plan des couches, le seuil d'absorption optique est déplacé vers les basses énergies, d'une quantité (quelques milli-électrons-volts, typiquement) proportionnelle au carré de la tension appliquée. On peut donc faire varier la transmission d'une lumière de longueur d'onde voisine du seuil d'absorption à l'aide d'une tension électrique.

Partant de ce principe, en utilisant diverses propriétés non-linéaires, on peut concevoir une variété de composants opto-électroniques intégrés destinés aux télécommunications par fibres optiques.

Deux aspects techniques sont à noter :
- l'utilisation d'une résonance excitonique limite pratiquement ce type de composants à la gamme de 0,8 micron (matériau GaAs), car les effets excitoniques sont beaucoup plus importants dans les matériaux de grande bande interdite, alors que les "fenêtres" qui semblent les plus intéressantes sont 1,3 micron, 1,5 micron, et 4 microns;
- il semble que le signe du déplacement (vers les basses énergies, ou "vers le rouge") implique que ces composants soient toujours "normalement passants", ce qui est un inconvénient du point de vue de la dissipation.

Bien que cet effet Stark n'implique pas, a priori, la nécessité de superréseaux (au sens général de structure périodique), on peut concevoir qu'il s'applique à ceux-ci, essentiellement dans la première catégorie sus-visée, à savoir celle de la succession de puits quantiques découplés.

La présente invention vient offrir un moyen différent pour utiliser un superréseau comme modulateur électro-optique.

L'invention a notamment pour but de fournir une structure qui ne fonctionne pas par usage d'une résonance excitonique, et ne soit donc pas limitée à la gamme des longueurs d'ondes optiques de 0,8 micromètre environ.

L'invention a aussi pour but de fournir une structure dont le seuil d'absorption se décale vers les hautes énergies (et non vers les basses énergies), en réponse à l'application d'un champ électrique de commande.

A cet effet, l'invention part d'un composant électro-optique semi-conducteur, qui comporte, en combinaison un substrat revêtu, selon un axe de croissance, d'un empilement de couches de semi-conducteur, propres à définir un superréseau présentant de puits quantiques présentant, du fait d'un couplage par effet tunnel résonnant, une bande où l'absorption optique est progressive, associée à une certaine largeur de bande d'énergie électronique, et des moyens permettant d'appliquer à ce superréseau un champ électrique de commande, parallèle à son axe de croissance, permettant de faire varier ladite largeur de bande d'arbsorption optique progressive, sans modifier sensiblement la position centrale de cette bande.

En faisant varier le champ électrique de commande à partir de zéro, on module la valeur du seuil d'absorption optique du superréseau. Et ce décalage s'effectue vers les hautes énergies ("vers le bleu") d'une quantité égale à quelques milli-électrons-volts (meV). Il en résulte un premier avantage essentiel : le composant électro-optique peut être utilisé comme "normalement opaque", et rendu transparent par application d'une tension de commande, grâce au fait que l'effet observé se manifeste comme un décalage vers le bleu.

Un autre avantage est que cet effet peut se manifester pour des superréseaux construits dans toutes sortes de systèmes (on appelle "systèmes" la nature des semi-conducteurs qui composent le superréseau), en particulier les systèmes possédant un faible écart d'énergie ("gap") entre la limite supérieure de la bande de valence et la limite inférieure de la bande de conduction.

Typiquement, l'épaisseur des couches d'un superréseau est de l'ordre de la dizaine de nanomètres, les valeurs les plus courantes étant de 4 à 6 nanomètres (40 à 60 angströms) pour l'épaisseur de chaque couche.

Dans le système dit III-V, les couches empilées sont faites d'alliages entre d'une part l'aluminium, le gallium et l'indium, d'autre part le phosphore, l'arsenic et l'antimoine, ces alliages pouvant être binaires ou ternaires, notamment.

Dans le système dit II-VI, les couches empilées sont faites par exemple d'alliages de mercure et/ou cadmium et/ou zinc avec le tellure.

Dans un mode de réalisation particulier de l'invention, le superréseau est constitué de couches InAs-GaSb.

Le composant de l'invention peut s'appliquer en tant que modulateur électro-optique, normalement bloqué en l'absence d'application du champ électrique de commande.

L'invention peut également être définie sous la forme d'un procédé électro-optique selon la revendication 8, qui comprend les opérations suivantes :
- prévoir un superréseau comprenant un substrat revêtu, selon un axe de croissance, d'un empilement de couches de semi-conducteur propres à définir une hétérostructure dont les puits quantiques présentent entre eux un couplage par effet tunnel résonant,
- appliquer au superréseau une lumière de travail, et
- appliquer à ce superréseau un champ électrique de commande, parallèle à son axe de croissance.

Le champ électrique crée une différence de potentiel entre deux puits quantiques successifs, de sorte que l'effet tunnel devient légèrement non résonant, et produit par là une modification de la structure de bande du superréseau. C'est, comme on le verra plus loin, de cette modification de la structure de bande du superréseau que résulte le décalage vers les hautes énergies ou vers le bleu du seuil d'absorption du rayonnement électromagnétique ou "lumière" appliquée au superréseau.

Cet effet de seuil d'absorption peut se manifester non seulement dans la direction de l'axe de croissance, mais aussi dans les autres directions du superréseau.

D'autres caractéristiques et avantages de l'invention apparaîtront à l'examen de la description détaillée ci-après, et des dessins annexés, sur lesquels :
- la figure 1 est un dessin schématique en perspective de la structure générale d'un superréseau;
- la figure 2 est un diagramme montrant l'évolution des bandes de conduction et de valence le long de l'axe de croissance d'un superréseau;
- la figure 3A est une figure semblable à la figure 2, mais montrant aussi les fonctions d'ondes relatives aux électrons et aux trous, dans le cas particulier d'un superréseau de type I;
- la figure 3B est un diagramme comparable à celui de la figure 3A, mais pour un superréseau de type II;
- les figures 4A et 4B sont deux diagrammes simplifiés semblables à ceux des figures 2 et 3, et montrant le phénomène connu sous le nom d'effet Stark confiné quantiquement;
- la figure 4C montre la courbe d'absorption en fonction de l'énergie, qui résulte de cet effet Stark;
- la figure 5 est un diagramme comparable à ceux des figures 2 et 3, permettant la mise en lumière de l'effet selon l'invention;
- la figure 6 illustre un diagramme de même nature que les figures 2 et 3, dans une situation différente, où l'on observe un phénomène connu sous le nom d'effet Franz-Keldish;
- la figure 7 est un diagramme d'intensité de luminescence en fonction de l'énergie de photons émis, constituant une mise en évidence expérimentale de l'effet selon l'invention;
- les figures 8 et 8A sont deux diagrammes d'absorption en fonction de l'énergie, constituant une autre mise en évidence de l'effet selon l'invention; et
- la figure 9 illustre un dispositif permettant la mise en oeuvre de l'invention.

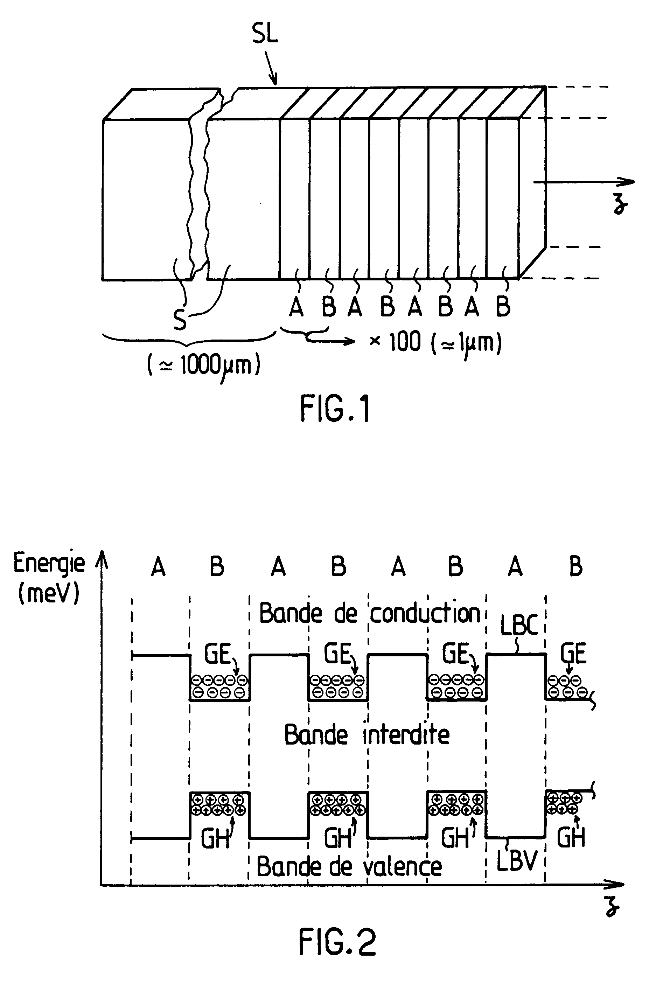

Sur la figure 1, le superréseau (en anglais "superlattice") SL est constitué d'un substrat S, dont l'épaisseur est de l'ordre d'une fraction de millimètre. Sur ce substrat, on a fait croître par exemple par épitaxie par jet moléculaire des couches alternées de matériaux A et B, et cela suivant une direction de croissance notée z. Le dessin n'étant pas à l'échelle, on admettra que le superréseau comporte une centaine de paires de couches A et B, formant une épaisseur globale d'un micromètre environ.

La figure 2 illustre, de façon générale, l'allure des limites LBC de la bande de conduction et LBV de la bande de valence, que présente un superréseau, lorsqu'on passe d'une couche A à une couche B, et ainsi de suite. L'ordonnée de la figure 2 représente des énergies, exprimées par exemple en milliélectrons-volts.

Dans le cas de la figure 2,qui concerne un superréseau de type I, on observe des puits de potentiel constitués par les creux de la limite LBC de la bande de conduction. Les porteurs de charges concernés, à savoir les électrons, vont s'établir préférentiellement dans ces puits de potentiel. Le dessin représente ainsi un nuage d'électrons GE au fond de chacun des puits de potentiel. Il s'agit là d'une simplification car il se produit dans un superréseau une quantification des niveaux d'énergie que peuvent prendre les électrons, en d'autres termes on dit qu'il existe des "sous-bandes" dans la bande de conduction.

On observe de même un nuage de porteurs de charges positives ou trous dans chacun des puits de la bande de valence, qui sont sur le dessin les "bosses" de celle-ci. Ces nuages de trous sont notés GH.

La bande interdite d'un superréseau est l'intervalle entre les sous-bandes fondamentales de conduction et de valence.

La dénomination "superréseau" a un double sens. Elle peut désigner tout d'abord une structure telle que celle de la figure 1, quelles qu'en soient les caractéristiques propres.

Mais on tend maintenant à la réserver aux structures de ce genre dans lesquelles les caractéristiques de géométrie et de matière du superréseau sont telles qu'il existe un couplage par effet tunnel résonant entre deux puits quantiques consécutifs.

Lorsqu'un tel couplage n'existe pas, on devrait parler d'une succession de puits quantiques, plutôt que d'un superréseau. Et un tel système est de dimension deux, car le système possède une anisotropie totale dans la direction z alors qu'il est isotrope dans les deux autres directions perpendiculaires.

Lorsqu'au contraire on est en présence d'un superréseau dont les puits quantiques sont assez fortement couplés entre eux par effet tunnel (résonant), le système possède une dimensionalité intermédiaire entre 2 et 3, du fait de ce couplage par effet tunnel résonant entre les différents puits.

Bien que cette considération n'intervienne que plus loin, on précisera dès maintenant que s'il y a un couplage extrêmement fort entre deux puits consécutifs, on trouve alors un système invariant par translation dans la direction z, dès lors que la translation est égale à un nombre entier de périodes du superréseau. Un tel système est alors de dimension 3, et sa qualification de superréseau est à nouveau discutable.

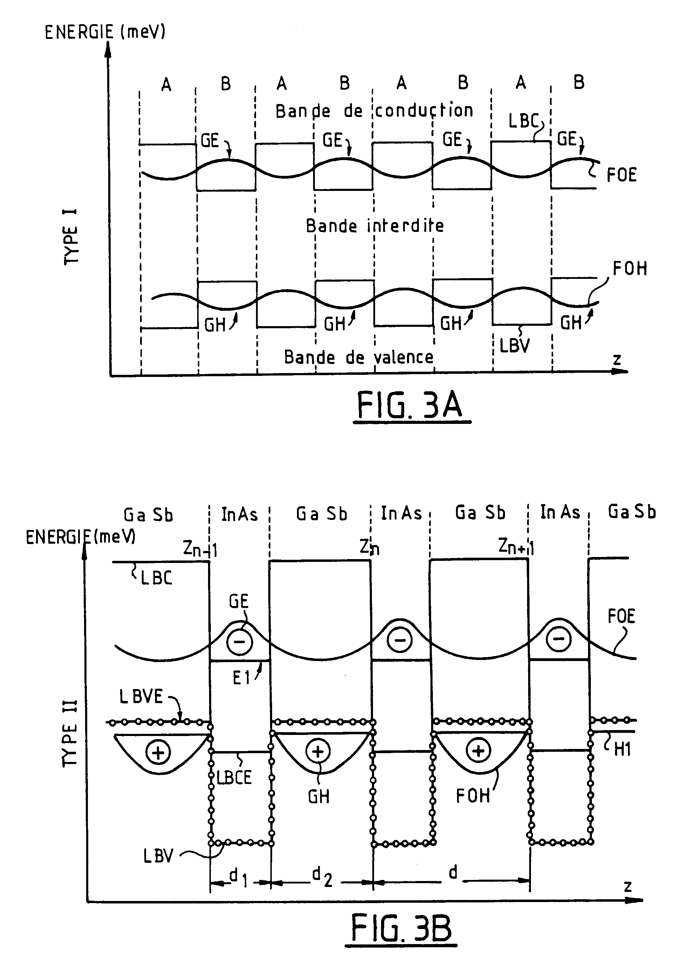

Pour sa part, la distinction entre superréseau de type I et de type II apparaît sur les figures 3A et 3B.

Dans un superréseau de type I (figure 3A), les puits quantiques de la limite LBC de la bande de conduction sont, sur l'axe de croissance z, sensiblement au même niveau que les puits quantiques (bosses) de la limite LBV de la bande de valence.

Pour un superréseau de type II (figure 3B), c'est exactement l'inverse, c'est-à-dire que les puits quantiques de la limite LBC, qui sont ici dans le matériau InAs sont en opposition de phase par rapport aux puits quantiques relatifs aux trous, définis ici dans les couches GaSb.

Sur les figures 3A et 3B, on a également représenté la fonction d'onde FOE relative aux électrons, et la fonction d'onde FOH relative aux trous.

On sait que ces fonctions d'ondes représentent la probabilité de présence d'un électron, respectivement d'un trou, le long de l'axe Z. Ces fonctions d'ondes sont données à titre purement qualitatif. Dans cet esprit, on observe que la probabilité de présence des électrons est maximale dans les puits de la bande de conduction. Mais la fonction d'onde FOE présente des ailes évanescentes de part et d'autre de ces puits, pour traverser la bande interdite, et rejoindre le puits adjacent dans la bande de conduction, d'un côté ou de l'autre.

Il en est de même pour la fonction d'onde FOH relative aux trous, remarque étant faite cependant qu'à cause de la masse plus élevée des trous, les ailes évanescentes de leurs fonctions d'ondes FOH s'affaiblissent en général plus rapidement que celles des électrons.

Sur la figure 3A, on a supposé que les deux fonctions d'ondes FOE et FOH possèdent des ailes évanescentes.

Sur la figure 3B, pour la raison qui vient d'être exposée, on admet au contraire que seule la fonction d'onde FOE comporte des ailes évanescentes appréciables, tandis que pour sa part la fonction d'onde FOH est pratiquement limitée au puits de potentiel concerné.

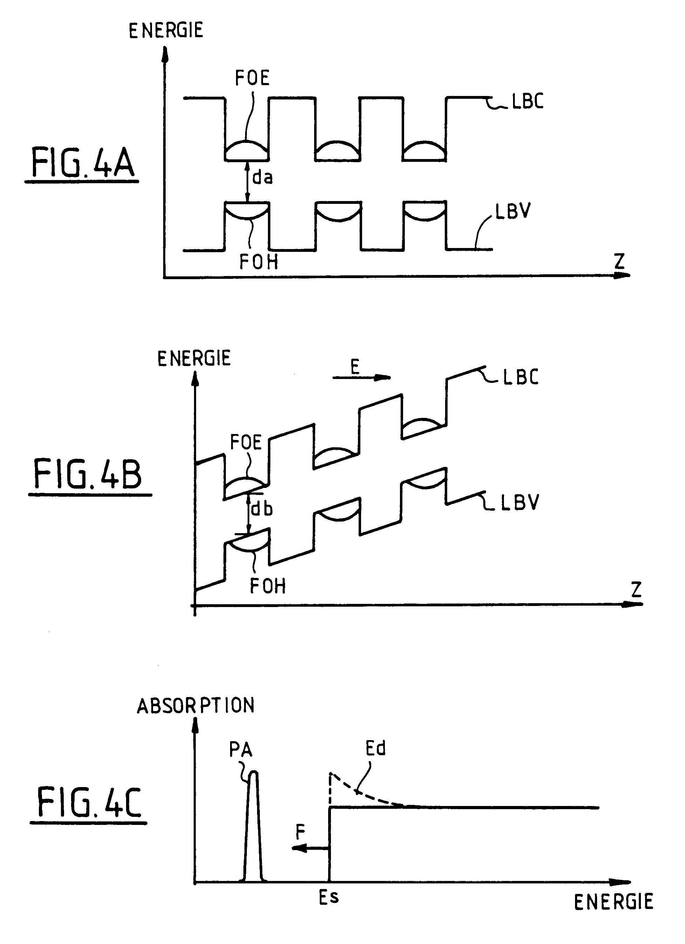

La figure 4A concerne le cas d'un "faux superréseau", c'est-à-dire d'un empilement périodique de couches dont les puits de potentiel sont quasi-totalement découplés entre eux. Les fonctions d'ondes FOE et FOH n'existent donc en substance que dans les puits de potentiel relatifs aux électrons et aux trous respectivement.

On a noté dₐ la distance minimale entre les lignes LBC et LBV, ici assimilée à la bande interdite ou "gap" de l'heterostructure par souci de simplicité.

Lorsqu'on applique un champ électrique à une telle sctructure selon l'axe z, l'énergie potentielle électrostatique s'ajoute au champ cristallin, de sorte que les niveaux d'énergie se décalent progressivement le long de l'axe z. Les courbes LBC et LBV prennent donc une forme inclinée, comme illustré sur la figure 4B. Il en résulte que la fonction d'onde FOE relative aux électrons est légèrement décalée, suivant l'axe z, par rapport à la fonction d'onde FOH relative aux trous. C'est là l'origine de l'effet Stark déjà mentionné. On voit qu'il est dû à une dissymétrie dans les fonctions d'ondes au niveau de chaque puits quantique. La nature quadratique de cet effet Stark est due au fait que c'est le déplacement des fonctions d'ondes, effet induit, qui induit à son tour une variation des niveaux d'énergie.

Il est également évident, à l'examen de la figure 4B, que la distance minimale d_{b} entre les lignes LBC et LBV, compte tenu de la pondération due aux fonctions d'ondes, est maintenant inférieure à la distance dₐ de la figure 4A.

En d'autres termes, en présence d'un champ électrique, l'intervalle de bande interdite va diminuer par rapport à la valeur qu'il avait en l'absence de champ électrique.

Ce qui précède est une explication très simplifiée de l'effet Stark confiné quantiquement, dans l'hypothèse où la transition serait du type dit bande à bande, abstraction faite de l'existence d'un couplage dit couplage excitonique entre un électron et un trou. Cet effet excitonique rend les choses un peu plus complexes en pratique. Mais, qualitativement, la description qui vient d'être donnée demeure correcte.

Le résultat final de cet effet Stark est illustré sur la figure 4C, qui représente le coefficient d'absorption en fonction de l'énergie des photons, et qui fait apparaître :
- tout d'abord un pic d'absorption excitonique, PA, puis un continuum d'absorption à partir d'un seuil d'énergie Eₛ. L'interaction de Coulomb fait d'ailleurs que ce continuum commence par une pointe Ed, illustrée en traits tiretés, avant de descendre vers sa valeur constante.

En présence d'un champ électrique, il se produit un décalage vers le rouge (les basses énergies) du seuil d'absorption Es, et du pic PA comme indiqué par la flèche F de la figure 4C.

Ce décalage est proportionnel au carré du champ électrique (ou de la tension) appliqué et augmente avec l'épaisseur du puits quantique.

Il convient maintenant de développer les observations déjà formulées :
- l'utilisation, dans cet effet Stark confiné quantiquement, d'une résonance excitonique, limite pratiquement ce type de composant à la gamme des longueurs d'ondes de 0,8 micromètre (matériau GaAs), alors que les fenêtres qui semblent les plus intéressantes pour la transmission optique sont 1,3, 1,5 et 4 micromètres;
- il apparaît que le signe de déplacement du seuil d'absorption, vers les basses énergies ou vers le rouge, implique que ces composants soient toujours normalement passants, ce qui est un inconvénient du point de vue de la dissipation, puisqu'il est plus fréquent qu'un organe soit à l'état de repos qu'à l'état de travail, la plupart du temps.

Dans la même représentation très schématique, la figure 3B fait apparaître les caractéristiques d'un superréseau utilisé selon l'invention.

Bien qu'elle n'y soit pas strictement limitée, l'invention s'applique préférentiellement à des matériaux dits "de petit gap", c'est-à-dire dans lesquels l'intervalle minimal entre les lignes LBC et LBV est faible.

Contrairement au cas des figures 4, on observe maintenant que les fonctions d'ondes FOE et FOH présentent des ailes évanescentes. En d'autres termes, les puits quantiques consécutifs sont maintenant assez fortement couplés par un effet tunnel dit effet tunnel résonant.

Il a été observé que, lorsqu'on applique à un tel superréseau un champ électrique, on tend à diminuer ou détruire la résonance de l'effet tunnel, et par conséquent on diminue la largeur de bande du superréseau. En effet, la largeur de bande du superréseau résulte du couplage tunnel résonant entre les différents puits quantiques.

Si on diminue cette résonance, on diminue donc cette largeur de bande.

En l'absence du couplage par effet tunnel, les niveaux d'énergie accessibles aux électrons et aux trous sont "discrétisés". Si l'on prend par exemple le cas de la figure 3B, le premier niveau d'énergie admis pour les électrons dans un puits quantique de la bande de conduction s'établit en E1.

De même, le premier niveau d'énergie accessible aux trous dans la bande de valence s'établit en H1. Ces niveaux d'énergie E₁ et H₁ sont indentiques pour les différents puits quantiques formant le superréseau. C'est pourquoi l'effet tunnel qui les couple est dit résonant.

L'effet tunnel résonant a pour effet que ces niveaux d'énergie deviennent en fait des bandes d'états permis, c'est-à-dire qu'il existe une variation DE1 permise autour de E1, et une variation DH1 permise autour de H1. Ces considérations générales sur les superréseaux ont déjà été développées dans la Demande de brevet français N^{o} 85 12 970 déposée le 30 août 1985. A toutes fins utiles, le contenu descriptif de cette Demande antérieure est incorporé à la présente description.

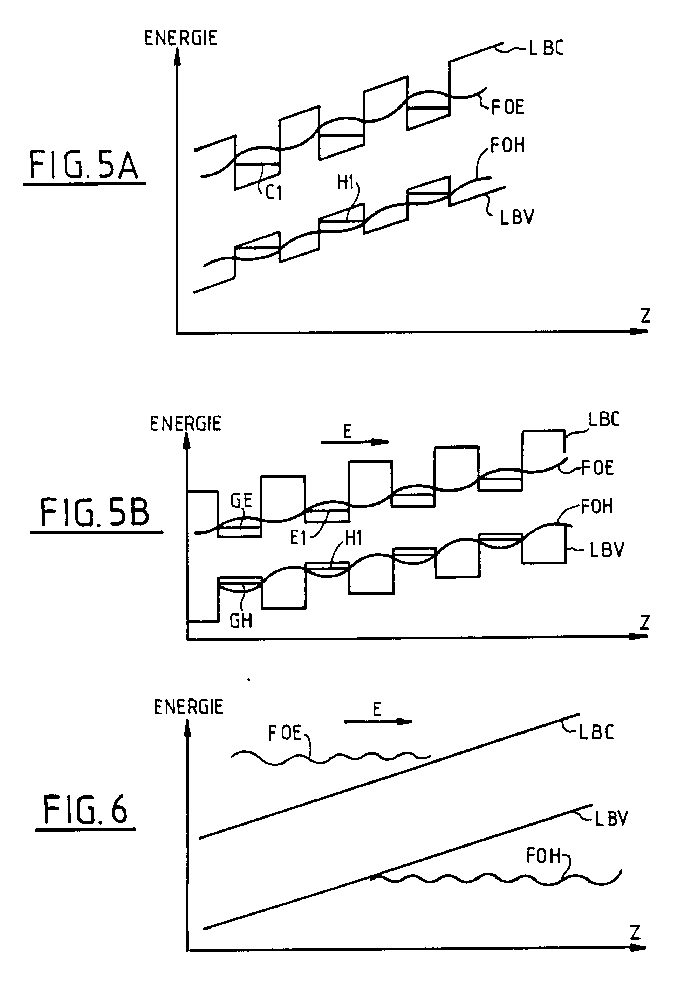

Lorsqu'on applique un champ électrique sur ce superréseau (Fig. 5A) les niveaux quantiques s'établissent à des énergies différentes dans les différents puits, de sorte que l'effet tunnel n'est plus résonant. Ceci se traduit par une diminution des largeurs de bande DE₁ et DH1, alors qu'au premier ordre, on n'a pratiquement pas touché aux valeurs des énergies E1 et H1 dans les puits quantiques, car ces valeurs ne dépendent du champ électrique que par un terme quadratique, qui est petit pour les puits étroits considérés ici.

Diminuant ainsi des bandes d'énergie autour de valeurs fixes, on aboutit à une conséquence remarquable : l'intervalle de bande interdite augmente.

C'est ainsi que, selon la présente invention, on réalise une application nouvelle des superréseaux, à partir d'un effet nouveau de ceux-ci, et qui en permet une application beaucoup plus générale et beaucoup plus satisfaisante, notamment comme modulateur optique.

Il convient maintenant de se tourner brièvement vers la figure 6, où l'on a supposé être en présence d'une structure invariante par translations périodiques suivant l'axe z.

Lorsque l'effet du champ électrique tend à séparer les électrons et les trous, on aboutit à un phénomène connu sous le nom d'effet Franz-Keldish, et qui réside en ce que les probabilités de présence de l'électron et du trou, c'est-à-dire les fonctions d'ondes FOE et FOH, vont être décalées spatialement le long de l'axe z. De ce fait, et compte tenu de l'allure inclinée de limite LBC et LBV sous l'effet du champ électrique, on conçoit qu'on en revient à une diminution de la largeur de bande interdite sous l'effet du champ électrique, et par conséquent un décalage vers le rouge lié à la séparation moyenne entre les probabilités de présence de l'électron et du trou.

Il apparaît maintenant que l'effet nouveau selon l'invention se manifeste entre deux effets électro-optiques à certains égards comparables, mais qui se manifestent en sens inverse :
- dans le cas d'un faux superréseau constitué en fait de puits quantiques successifs non couplés entre eux, l'effet Stark confiné quantiquement se traduit par un décalage vers le rouge du seuil d'absorption; la dimensionalité du système est II, pour le phénomène concerné, puisqu'il est isotrope dans les deux dimensions perpendiculaires à l'axe z, tandis qu'il n'y a aucune continuité selon l'axe z;
- dans l'autre cas extrême où le système est invariant par translation pour le phénomène concerné, c'est à-dire que l'effet du champ électrique tend simplement à séparer les électrons et les trous, qui peuvent sauter de façon quasiment libre d'un puits quantique au voisin, on se trouve alors en présence de l'effet Franz-Keldish qui produit lui aussi un décalage vers le rouge du seuil d'absorption; la dimensionalité du système est alors III puisque le phénomène se manifeste aussi bien suivant l'axe z que selon les deux directions perpendiculaires;
- au contraire, dans le cas de l'invention, où il y a des puits quantiques assez fortement couplés entre eux, mais non totalement couplés, l'effet nouveau selon l'invention se manifeste par un décalage vers le bleu, c'est-à-dire vers les hautes énergies, du seuil d'absorption; et l'on observe que la dimensionalité du système est comprise entre II et III.

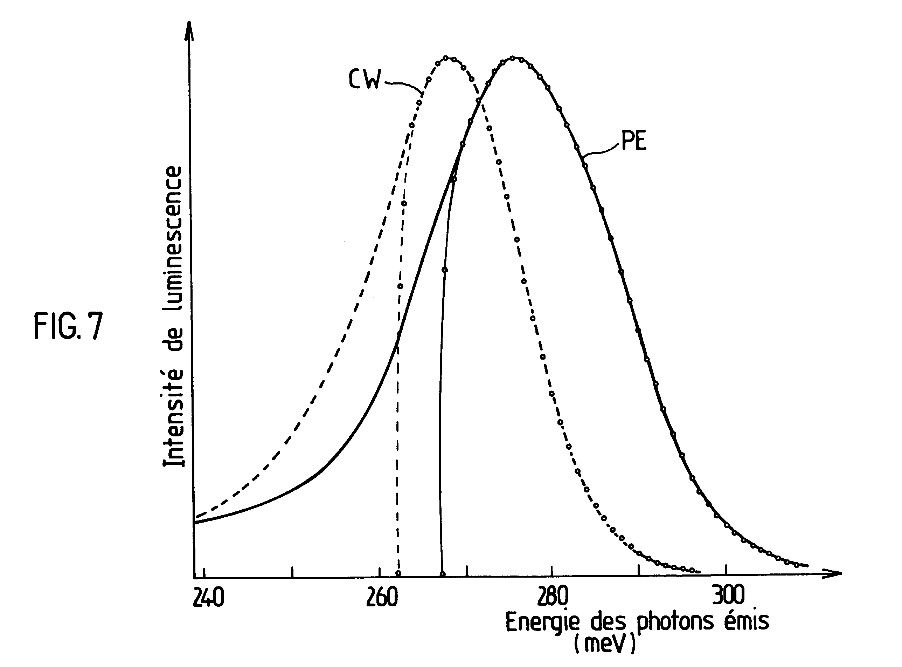

La figure 7 constitue une manifestation expérimentale indirecte de l'effet selon l'invention.

Dans la Demande de brevet déjà citée N^{o} 85 12 970, cette même figure apparaît en tant que figure 5.

Cette figure illustre le spectre de luminescence obtenu lors de l'excitation d'un superréseau InAs/GaSb (épaisseurs de couches respectivement 3 nanomètres et 5 nanomètres), excité d'une part par un laser au Krypton à émission continue, d'autre part par un laser Argon muni d'un modulateur acousto-optique et délivrant des impulsions courtes d'environ 20 nanosecondes, à 150 nanojoules par impulsion, alors que l'excitation continue s'effectue à 80 milliwatts.

La figure 7 montre que la courbe de luminescence sous onde continue CW consiste en une seule raie centrée sur 270 meV environ, et comportant un flanc à basse énergie qui tend à se saturer lorsqu'on augmente le niveau d'excitation.

Lors de l'excitation du superréseau par impulsions brèves, on obtient la courbe PE, qui manifeste à l'évidence un décalage d'ensemble vers les énergies plus élevées. Les ronds reliés par un trait (tireté pour la courbe CW et continu pour la courbe PE) représentent l'interprétation théorique de ces spectres de luminescence en termes de recombinaison intrinsèque. La coupure basse énergie de ces courbes théoriques est le gap ou bande interdite du superréseau, qui est donc plus grand lorsque le superréseau est soumis à une excitation pulsée.

Dans la Demande de brevet précitée, différents effets étaient invoqués pour expliquer ce décalage, à savoir notamment le phénomène connu de courbure périodique des bandes, associé à la séparation spatiale des porteurs.

Il était constaté que cet effet était insuffisant pour rendre compte de la variation rencontrée.

Et la Demande de brevet antérieure concluait à l'existence d'un effet photo-induit transitoire (qui fait d'ailleurs l'objet de cette Demande de brevet antérieure) sous la forme d'une tension électrique apparaissant entre les extrémités du superréseau.

Il a maintenant été possible de quantifier de façon plus précise les divers effets impliqués. Et il apparaît qu'en fait le décalage vers le bleu reflète une contribution de l'effet nouveau décrit selon la présente invention, la tension électrique photo-induite modifiant en retour la bande interdite ou gap du superréseau, ainsi qu'il est ici expliqué.

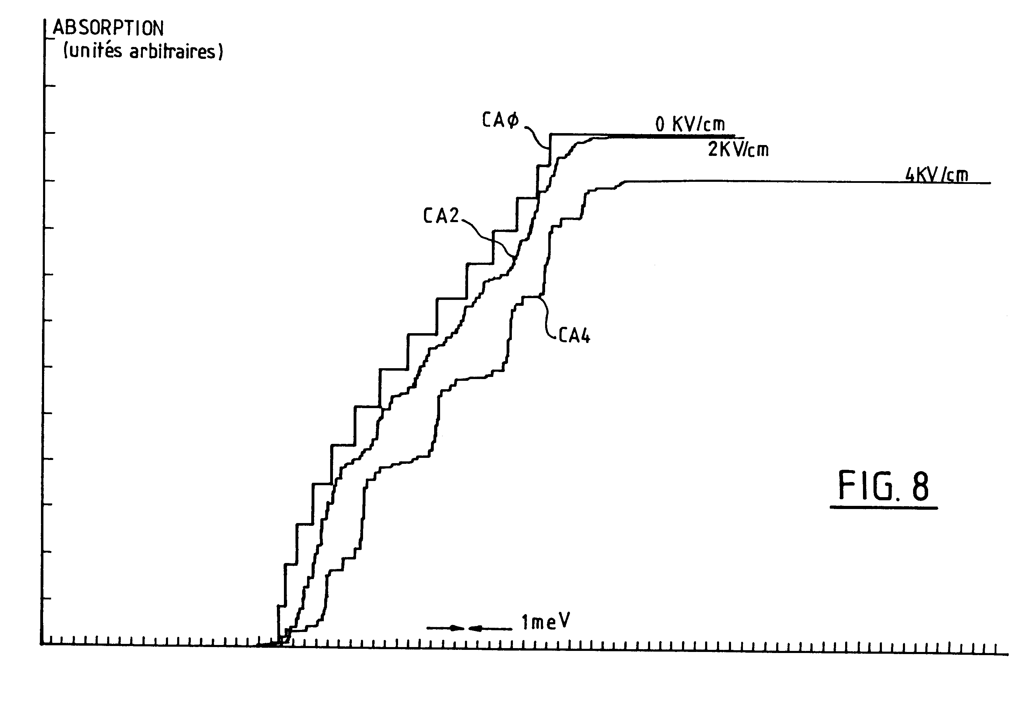

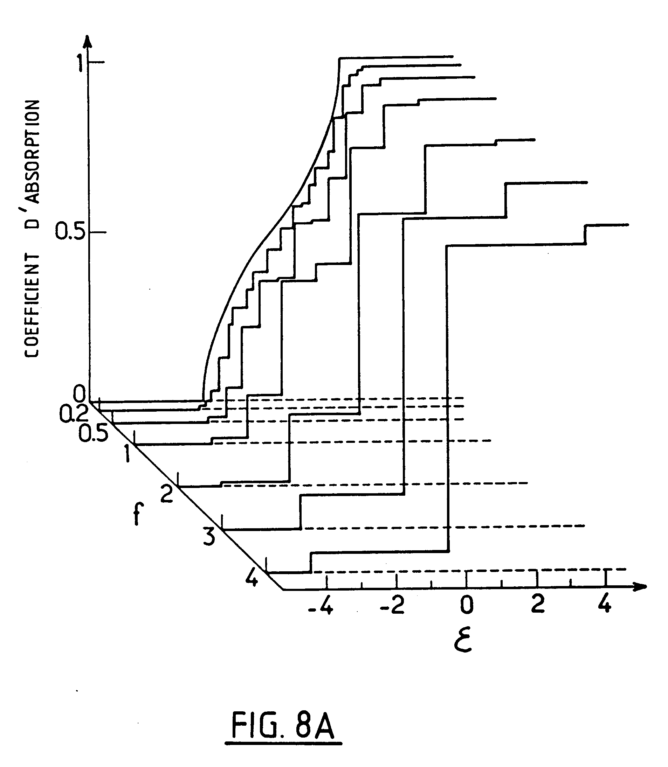

A partir de cette constatation, il a été procédé à des études théoriques et expérimentales, dont les résultats sont illustrés sur les figures 8 et 8a.

Pour la figure 8, il s'agit de 16 puits quantiques dont l'épaisseur est 4 nanomètres, séparés par des barrières de 4 nanomètres également, le matériau de base étant GaAs.

On dispose donc d'une structure constituée de 16 puits quantiques séparés par 15 barrières, auxquels on applique successivement des champs électriques 0, 2 et 4 kilovolts par centimètre, ces valeurs étant en fait très modestes, car elles correspondent à une tension maximum de 72 millivolts aux bornes de la structure. Le calcul est fait en approximant le potentiel de la figure 5a par celui de la figure 5b, ce qui revient à négliger un terme petit contribuant à l'effet Stark confiné quantiquement, lequel est de toute façon négligeable pour ces épaisseurs et ces valeurs du champ électrique.

A champ nul, la courbe CA0 possède une structure en escalier à 15 niveaux qui reflète la structure du superréseau.

Cette structure en escalier reflète le fait que sur les n² états combinés de trous et d'électrons existant n états seulement contribuent à l'absorption optique, compte tenu des différentes possibilités d'installer des fonctions d'ondes symétriques et antisymétriques sur la structure.

A noter encore qu'on a admis ici que seules les fonctions d'ondes relatives aux électrons possèdent des ailes évanescentes significatives, les trous n'en ayant pas, compte tenu de leur masse effective plus élevée.

Lorsqu'on applique maintenant un champ électrique, le côté discret (en marche d'escalier) de la courbe s'atténue considérablement, car il y a maintenant n² marches, ceci est dû à la rupture de symétrie introduite par le champ électrique. C'est ainsi que la courbe CA2 donne une variation d'allure continue entre l'absorption 0 aux basses énergies et l'absorption saturée aux hautes énergies, qui est proche de celle obtenue à champ nul.

Lorsqu'on augmente encore le champ électrique, on obtient à 4 kilovolts par centimètre la courbe CA4, qui conserve une structure discrète fine, mais on retrouve aussi une structure grossière en marche d'escalier, qui traduit le fait que l'effet Franz-Keldish commence à se manifester.

Il se trouve ainsi démontré que l'application d'un champ électrique à un superréseau ici limité à 15 barrières se traduit par une petite variation, de quelques milli-électronsvolts, du seuil d'absorption, et ce vers les hautes énergies.

Les courbes de la figure 8 sont relatives à une structure de type GaAs, procurant un superréseau de type I, dans lequel il n'y a pas de séparation spatiale des charges.

Mais l'invention peut se manifester aussi bien dans un superréseau de type II.

Les épaisseurs caractéristiques des matières doivent être choisies telles que les puits quantiques successifs soient assez fortement couplés entre eux. L'homme de l'art sait évaluer ce couplage, par exemple comme décrit dans :
a) G. Bastard, Phys. Rev. B 24, 5693 (1981) et B 25, 7584 (1982).
b) P. Voisin, G. Bastard, M. Voos "Optical selection rules in superlattices in the envelope function approximation" Phys. Rev. Vol 29, page 935, 1984.

La figure 8A illustre l'absorption normalisée d'un superréseau GaAs/AlGaAs de 41 périodes, en fonction d'un paramètre relatif à l'énergie photonique "epsilon", pour des valeurs croissantes d'un paramètre de champ électrique "f".

On observe clairement un décalage vers le bleu, lorsqu'on passe du champ électrique f=0 au champ électrique f=4 (voir le grand échelon rencontré sur la courbe f=4, les autres échelons ne représentant que 10% de l'absorption totale, dans les unités utilisées).

On a également observé des oscillations périodiques du coefficient d'absorption à énergie photonique fixe, en fonction de l'inverse du champ électrique, près du bord de bande, par exemple pour "epsilon"=0,9.

L'invention suppose que les épaisseurs des puits comme celles des barrières soient suffisamment petites.

On doit cependant éviter des épaisseurs de matériaux trop faibles, faute de quoi l'effet Franz-Keldish l'emporterait.

Il est estimé que des épaisseurs de matière de 30 à 50 angströms conviennent, ce qui correspond à des largeurs de sousbandes de conduction de l'ordre de quelques dizaines de milliélectrons-volts.

Bien entendu, comme déjà indiqué, l'effet de l'invention n'est pas limité au système dit GaAs. Il peut se manifester avec de nombreux autres alliages binaires ou ternaires de matériaux, en particulier semi-conducteurs III-V plus précisément IIIA-VA, ou encore avec des matériaux II-VI, plus précisément IIB-VIA, ou même avec des matériaux IV-IV (IVA-IVA) ou bien IV-VI (IVAVIA).

Si la longueur d'onde de transmission optique qu'il s'agit de moduler correspond à 0,8 micromètre, un superréseau GaAs/ AlGaAs convient, mais on peut également utiliser d'autres superréseaux tels que CdTe/ZnTe.

Dans les gammes 1,5 micron et 1,3 micron, on peut notamment utiliser GaSb/AlSb ou encore InGaAS/InP ou InGaAs/AlInAs.

Dans la gamme des modulateurs pour quatre micromètres (fibres en verre fluoré), les superréseaux InAs/GaSb qui fonctionnent comme indiqué plus haut sont particulièrement intéressants.

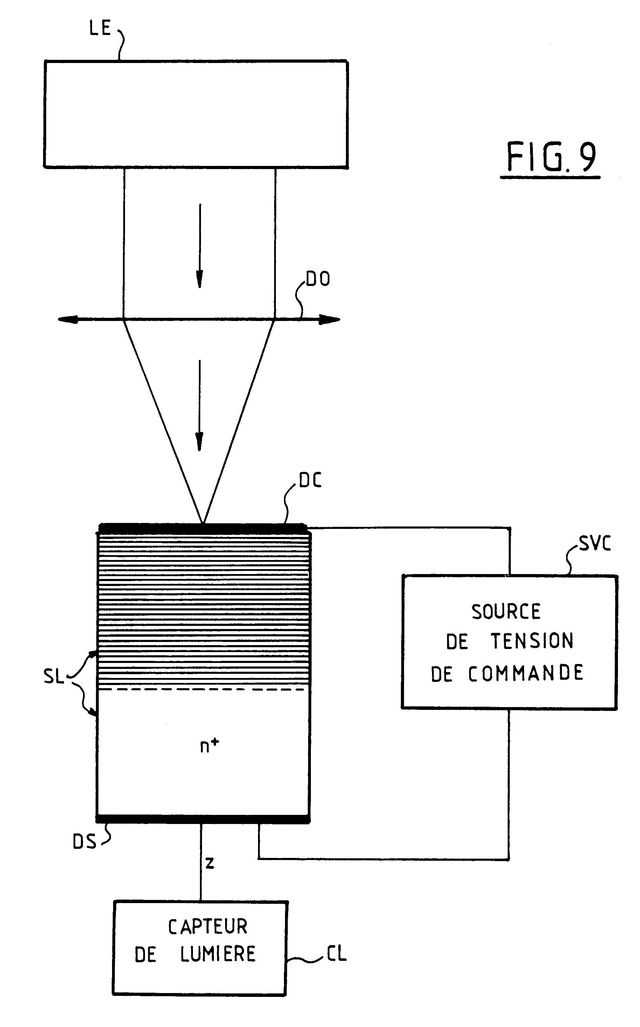

La figure 9 montre un dispositif selon l'invention.

La lumière d'une source LE (laser + fibre optique par exemple) est appliquée à travers une lentille de couplage DO à une extrémité d'un superréseau SL.

Cette extrémité est munie d'une couche de contact transparente DC, par exemple une électrode métallique semi-transparente, réalisée par évaporation UHV ou une fine couche de semiconducteur fortement dopée réalisée lors de la croissance du superréseau.

A l'opposé, sur le substrat, est prévue une autre couche de contact transparente DS, réalisable comme la précédente.

Une source SVC produit une tension de commande réglable, appliquée entre les couches DC et DS.

La lumière traversant le superréseau suivant l'axe z est détectée par un capteur CL, éventuellement associé à une fibre optique aval.

En variante, la lumière traverse le superréseau perpendiculairement à son axe de croissance z. En ce cas, les couches de contacts ne sont pas nécessairement transparentes.

On peut alors coupler, sur le même substrat, un émetteur de lumière (éventuellement à superréseau) et un modulateur selon l'invention.

Bien entendu, l'invention n'est pas limitée aux modes de réalisation décrits. Elle peut s'appliquer non seulement à des superréseaux périodiques, tels que définis plus haut, mais aussi à tout type d'hétérostructure présentant des puits quantiques fortement couplés par effet tunnel, ou bien des groupes de tels puits quantiques.

## Revendications

1. Composant électro-optique semi-conducteur, comprénant en combinaison :
- un substrat (S) revêtu, selon un axe de croissance, d'un empilement de couches (A, B) de semi-conducteurs, propres à définir un superréseau de puits quantiques présentant, du fait d'un couplage par effet tunnel résonnant, une bande où l'absorption optique est progressive, associée à une certaine largeur de bande d'énergie électronique,
- et des moyens (SVC) d'application à ce superréseau d'un champ électrique de commande, parallèle à son axe de croissance, permettant de faire varier ladite largeur de bande d'absorption optique progressive, sans modifier sensiblement la position centrale de cette bande.

2. Composant selon la revendication 1, caractérisé en ce que l'épaisseur des couches est de l'ordre de la dizaine de nanomètres.

3. Composant selon l'une des revendications 1 et 2, caractérisé en ce que les couches empilées (A,B) sont faites de semi-conducteurs III-V, en particulier d'alliages entre l'aluminium, le gallium, l'indium, d'une part, et le phosphore, l'arsenic, l'antimoine, d'autre part.

4. Composant selon l'une des revendications 1 à 3, caractérisé en ce que le superréseau est constitué de couches InAs-GaSb.

5. Composant selon l'une des revendications 1 et 2, caractérisé en ce que les couches empilées (A, B) sont faites de matériaux II-VI, en particulier d'alliages de mercure et/ou cadmium et/ou zinc avec le tellure, ou encore de matériaux IV-VI, tels que Tellurure de plomb ou d'étain.

6. Application du composant selon l'une des revendications précédentes en tant que modulateur électro-optique.

7. Application selon la revendication 6, caractérisée en ce que le modulateur est normalement bloqué, en l'absence d'application du champ électrique de commande.

8. Procédé électro-optique, comprénant les opérations suivantes :
- prévoir un superréseau comprenant un substrat (S) revêtu, selon un axe de croissance, d'un empilement de couches (A, B) de semi-conducteur, propres à définir une hétérostructure dont les puits quantiques présentant, du fait d'un couplage par effet tunnel résonnant, une bande où l'absorption optique est progressive, associée à une certaine largeur de bande d'énergie électronique,
- appliquer au superréseau une lumière de travail, et
- appliquer à ce superréseau un champ électrique de commande (E) parallèle à son axe de croissance, permettant de faire varier ladite largeur de bande d'absorption optique progressive, sans modifier sensiblement la position centrale de cette bande.

## Claims

1. A semiconductor electro-optical component comprising in combination:
- a substrate (S) which is coated along a growth axis by a stack of semi-conductor layers (A, B) so as to form a super-array of quantum wells which as a result of coupling by means of a resonating tunnel effect produce a band in which optical absorption is progressive, associated with a certain electronic energy band width,
- and means (SVC) for applying a control electrical field to this super-array, parallel to its axis of growth, so that the said progressive optical absorption band width can be varied without appreciably altering the central position of the band.

2. A component according to claim 1, characterised in that the thicknesses of the layers are of the order of 10 nanometres.

3. A component according to one of claims 1 and 2, characterised in that the stacked layers (A, B) are constructed of III-V semiconductors, in particular alloys of aluminium, gallium or indium with phosphorus, arsenic or antimony.

4. A component according to any one of claims 1 to 3, characterised in that the super-array consists of InAs-GaSb layers.

5. A component according to either of claims 1 or 2, characterised in that the stacked layers (A, B) are constructed of II-VI materials, in particular alloys of mercury and/or cadmium and/or zinc with tellurium, or IV-VI materials such as lead or tin telluride.

6. Application of the component according to any one of the foregoing claims as an electro-optical modulator.

7. Application according to claim 6, characterised in that the modulator is normally blocked in the absence of an applied electrical control field.

8. An electro-optical process comprising the following stages:
- the provision of a super-array comprising a substrate (S) which is coated along a growth axis with a stack of semiconductor layers (A, B) so as to produce a heterogeneous structure whose quantum wells have, as a result of coupling by means of a resonating tunnel effect, a band in which optical absorption is progressive, associated with a certain electronic energy band width,
- applying a working light to the super-array, and
- applying to this super-array a control electrical field (E) which is parallel to its growth axis so that the said progressive optical absorption band width can be varied without appreciably altering the central position of the band.

## Patentansprüche

1. Elektro-optisches Bauelement, das in Verbindung aufweist:
- ein Substrat (S), das entlang einer Wachstumsachse mit einer Stapelung von Halbleiterschichten (A, B) bedeckt ist, die geeignet sind, ein Übergitter mit Quantentöpfen zu bilden, die aufgrund einer Koppelung durch den resonanten Tunneleffekt ein Band aufweisen, in dem die optische Absorption zunimmt und mit einer bestimmten Breite des elektronischen Energiebandes verbunden ist,
- und eine Vorrichtung (SVC), die das Anlegen eines elektrischen Steuerfeldes an dieses Übergitter parallel zu seiner Wachstumsachse ermöglicht, welches ermöglicht, die Breite des zunehmenden optischen Absorptionsbandes zu ändern, ohne die zentrale Position dieses Bandes wesentlich zu ändern.

2. Bauelement nach Anspruch 1, dadurch gekennzeichnet, daß die Dicke der schichten im Bereich von einigen zehn Nanometern liegt.

3. Bauelement nach einem der Ansprüche 1 und 2, dadurch gekennzeichnet, daß die gestapelten schichten (A, B) aus III-V-Halbleitern bestehen, insbesondere aus Legierungen auf der einen Seite aus Aluminium, Gallium und Indium, auf der anderen Seite aus Phosphor, Arsen und Antimon.

4. Bauelement nach einem der Ansprüche 1 bis 3, dadurch gekennzeichnet, daß das Übergitter aus Schichten aus InAs-GaSb besteht.

5. Bauelement nach einem der Ansprüche 1 und 2, dadurch gekennzeichnet, daß die gestapelten Schichten (A, B) aus II-VI-Materialien bestehen, insbesondere aus Legierungen aus Quecksilber und/oder Cadmium und/oder Zink mit Tellur oder auch aus IV-VI-Materialien wie etwa aus Blei- oder Zinntellurid.

6. Verwendung des Bauelements nach einem der vorstehenden Ansprüche, dadurch gekennzeichnet, daß es als elektrooptischer Modulator verwendet wird.

7. Verwendung nach Anspruch 6, dadurch gekennzeichnet, daß der Modulator normalerweise in Abwesenheit eines elektrischen Steuerfeldes blockiert ist.

8. Elektro-optisches Verfahren, welches folgende Operationen umfaßt:
- das Bereitstellen eines Übergitters mit einem Substrat (S), das entlang einer Wachstumsachse mit einer Stapelung von Halbleiterschichten (A, B) bedeckt ist, die geeignet sind, eine Heterostruktur zu bilden, deren Quantentöpfe aufgrund des resonanten Tunneleffekts ein Band aufweisen, wo die optische Absorption zunehmend ist und mit einer bestimmten Breite des elektronischen Energiebandes verbunden ist,
- das Anlegen eines Arbeitslichtes an das Übergitter, und
- das Anlegen eines elektrischen Steuerfeldes an dieses Übergitter parallel zu seiner Wachstumsachse.
